## Europäisches Patentamt
## European Patent Office
## Office européen des brevets

(19)

(11) Numéro de publication: **0 112 207**
**B1**

(12) **FASCICULE DE BREVET EUROPÉEN**

(45) Date de publication du fascicule du brevet:
**08.06.88**

(51) Int. Cl.⁴: **F 16 K 1/22,** F 16 K 31/10,
A 62 C 3/14

(21) Numéro de dépôt: **83402227.9**

(22) Date de dépôt: **18.11.83**

(54) **Obturateur de conduit.**

(30) Priorité: **25.11.82 FR 8219781**

(43) Date de publication de la demande:
**27.06.84 Bulletin 84/26**

(45) Mention de la délivrance du brevet:
**08.06.88 Bulletin 88/23**

(84) Etats contractants désignés:
**BE DE GB IT NL**

(56) Documents cité:
**DE-A-2 605 451**
**DE-A-2 657 223**
**GB-A-1 410 589**
**US-A-2 382 720**
**US-A-3 254 660**
**US-A-3 934 796**

(73) Titulaire: **COMMISSARIAT A L'ENERGIE
ATOMIQUE, 31/33, rue de la Fédération, F-75015
Paris (FR)**

(72) Inventeur: **Pobelle, Jacques, 10, rue Sainte- Marie,
F-21120 Isle- Sur- Tille (FR)**

(74) Mandataire: **Mongrédien, André, c/o BREVATOME
25, rue de Ponthieu, F-75008 Paris (FR)**

LIBER. STOCKHOLM 1988

**0 112 207**

## Description

La présente invention concerne un obturateur de conduit. Elle s'applique notamment à l'équipement de clapets coupe-feu, en particulier de clapets coupe-feu destinés à équiper des gaines de soufflage ou d'extraction-ventilation, par exemple du genre de celles que l'on rencontre dans des installations de traitement de produits radioactifs.

On connait des obturateurs utilisés comme clapets coupe-feu dans de telles installations. Ces obturateurs présentent des inconvénients de fiabilité et de sécurité car ils comportent une lame mobile prévue pour basculer sous l'effet de la pesanteur mais dont le basculement est incertain, ce qui oblige, en cas de non-basculement, à une intervention manuelle à l'endroit où se trouve cet obturateur, le feu pouvant être déclaré.

La présente invention a pour but de remédier à ces inconvénients.

Le document DE-A-2 605 451 décrit un dispositif d'arrêt contre le feu et la fumée dans les conduits d'aération, comprenant un clapet de fermeture commandé par un vérin.

Le document GB-A-1 410 589 décrit un mécanisme pour actionner une vanne, comprenant un poids solidaire du clapet de fermeture de la vanne. Sous l'effet d'une impulsion mécanique, le poids bascule et provoque la fermeture de la vanne dont la réouverture est manuelle.

L'invention a pour objet un obturateur de conduit comprenant :
- un élément de fermeture du conduit, cet élément étant apte à pivoter autour d'un axe et à occuper une première et une seconde positions correspondant respectivement aux états ouvert et fermé du conduit,
- une pièce rendue rigidement solidaire de l'élément de fermeture et ainsi apte à occuper une première et une seconde positions correspondant respectivement aux états ouvert et fermé du conduit,
- un organe mobile par rapport à la pièce, et
- un moyen de déplacement de l'organe,
obturateur caractérisé en ce que ledit élément de fermeture est en outre apte à passer de la première position à la seconde par basculement sous l'effet de la pesanteur, et en ce que ledit organe comprend un élément mobile par rapport à la pièce et un électro-aimant qui, porté par l'élément mobile, est prévu pour maintenir la pièce contre l'élément mobile lorsque cet électro-aimant est excité par des moyens de commande, l'organe permettant de provoquer, sous l'action du moyen de déplacement, d'une part, lorsque l'électro-aimant est excité, un mouvement de la pièce de sa seconde à sa première position, celle-ci étant stable tant que l'électro-aimant est excité, la seconde position de la pièce étant obtenue lorsque l'électro-aimant est désexcité, libérant ainsi la pièce et provoquant donc le basculement de l'élément de fermeture, et d'autre part, un mouvement inverse de la pièce, garantissant ainsi la fermeture du conduit au cas où l'élément de fermeture ne basculerait pas une fois la pièce libérée de l'action de l'électro-aimant, lorsque celui-ci est désexcité.

Le basculement de l'élément de fermeture est donc assuré grâce audit moyen de déplacement, lorsque cet élément de fermeture ne bascule pas par lui-même sous l'effet de la pesanteur, à cause de problèmes d'ordre mécanique par exemple. L'obturateur objet de l'invention est ainsi bien plus fiable et plus sur que les obturateurs de l'art antérieur.

Le conduit peut être disposé horizontalement ou verticalement ou selon toute autre direction.

Selon une caractéristique particulière de l'obturateur objet de l'invention, le moyen de déplacement de l'organe est un vérin comportant un corps et une tige articulée sur l'élément mobile et ce vérin est prévu pour déplacer cet élément mobile par l'intermédiaire de la tige. Ledit vérin peut être par exemple hydraulique, mécanique ou électro-magnétique.

Selon une autre caractéristique particulière, l'élément de fermeture comporte une plaque apte à pivoter à l'intérieur du conduit grâce à un axe de pivotement dont elle est rendue rigidement solidaire, la pièce est rendue rigidement solidaire dudit axe de pivotement et l'élément mobile est mobile en rotation par rapport à cette pièce, coaxialement à celle-ci.

Selon une autre caractéristique particulière, des arrêtoirs sont prévus à l'intérieur du conduit pour définir la seconde position de la plaque.

Selon une caractéristique préférée de l'invention, un fluide étant susceptible de s'écouler dans le conduit, la plaque est prévue pour basculer dans le sens de l'écoulement du fluide.

Selon une autre caractéristique particulière de l'invention, le conduit étant vertical, ledit axe de pivotement est situé en dehors de la plaque, de façon à favoriser le basculement de cette plaque. Bien entendu, cette position particulière de l'axe de pivotement peut être utilisée quelle que soit la disposition du conduit.

Selon une autre caractéristique particulière, ladite pièce comporte un élément attirable par l'électro-aimant lorsque celui-ci est excité.

Selon une autre caractéristique particulière, ledit organe, ladite pièce et ledit moyen de déplacement sont montés sur un bâti prévu pour être fixé sur le conduit et ladite pièce comporte un axe de rotation prévu pour tourner par rapport au bâti et pour se trouver rigidement relié à l'axe de pivotement de ladite plaque et dans le prolongement de celui-ci, une fois le bâti fixé au conduit.

Selon une autre caractéristique particulière, l'obturateur de conduit objet de l'invention comporte en outre deux interrupteurs de position électriques coopérant avec ladite pièce pour rendre compte de l'état ouvert ou fermé du conduit.

Selon une autre caractéristique particulière, l'obturateur de conduit objet de l'invention comporte en outre un troisième interrupteur de position électrique coopérant avec ledit élément mobile pour rendre compte de la position de ce dernier. Ces interrupteurs de position électriques sont par exemple des microrupteurs.

2

L'invention sera mieux comprise à la lecture de la description qui suit d'exemples de réalisation donnés à titre indicatif et non limitatif, en référence aux dessins annexés sur lesquels :

- la figure 1 est une vue schématique d'un mode de réalisation particulier de l'obturateur de conduit objet de l'invention,

- la figure 2 est une vue de dessus schématique de l'obturateur selon l'invention, représenté sur la figure 1, montrant comment celui-ci est monté sur le conduit, et

- les figures 3 et 4 sont des vues schématiques d'obturateurs de conduit selon l'invention, respectivement montés sur un conduit horizontal et sur un conduit vertical.

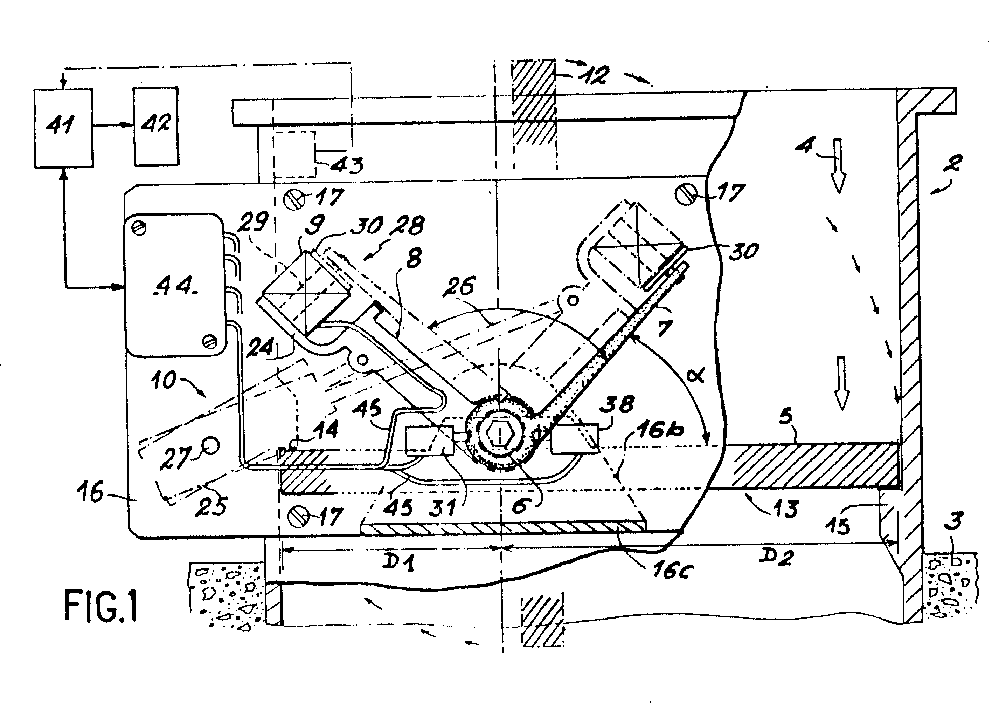

Sur la figure 1, on a représenté schématiquement un mode de réalisation particulier de l'obturateur de conduit objet de l'invention. A titre d'exemple, il est utilisé en tant que clapet coupe-feu et monté sur un conduit 2 qui consiste par exemple en un tunnel coupe-feu reliant deux gaines de ventilation (soufflage ou extraction) non représentées et traversant une paroi 3 (par exemple un mur, un plancher ou un plafond) coupe-feu. Le conduit 2 est par exemple vertical et susceptible d'être parcouru de haut en bas par un fluide tel que l'air, symbolisé par des flèches 4 sur la figure 1. L'obturateur selon l'invention, représenté sur la figure 1, comprend essentiellement :

- un moyen de fermeture du conduit 2, constitué par une plaque mobile 5, rendue rigidement solidaire d'un axe de pivotement 6,

- une pièce 7 rendue rigidement solidaire de cet axe de pivotement 6 et encore appelée "biellette",

- un organe mobile constitué par une autre pièce 8, encore appelée "basculeur", mobile en rotation par rapport à la pièce 7, coaxialement à celle-ci, et par un électro-aimant 9 monté sur l'autre pièce 8, et

- un moyen 10 de déplacement de l'autre pièce 8.

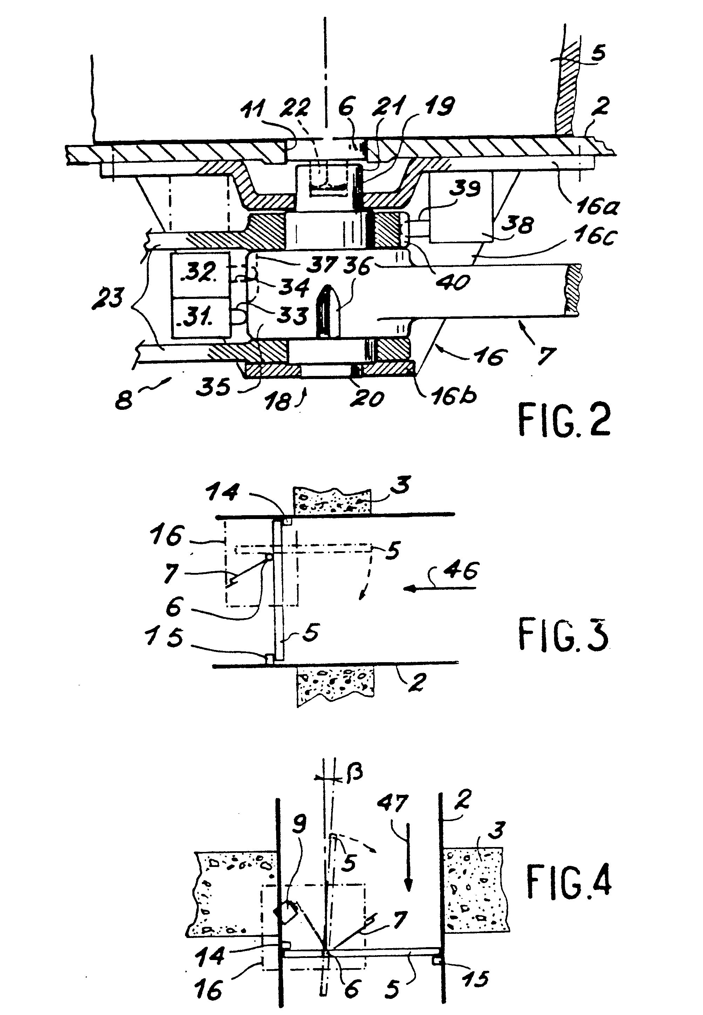

Dans l'exemple représenté sur la figure 1, l'axe de pivotement 6 est horizontal. Il est apte à tourner dans des paliers 11 dont est pourvu le conduit 3 et dont l'un est représenté sur la figure 2. La plaque 5, rendue rigidement solidaire de l'axe de pivotement 6, est apte à occuper une première position 12 verticale dans l'exemple considéré et correspondant à l'état ouvert du conduit 2 et une seconde position 13 horizontale dans l'exemple considéré et correspondant à l'état fermé du conduit 2. Bien entendu, la forme de la plaque 5 est prévue pour que le conduit 2 se trouve effectivement ouvert (respectivement fermé) lorsque la plaque 5 est verticale (respectivement horizontale).

En outre, la plaque 5 est apte à passer de sa première position 12 à sa seconde position 13 par basculement dans le sens des aiguilles d'une montre autour de l'axe de pivotement 6, sous l'effet de la pesanteur. Pour ce faire, la position de cet axe de pivotement 6 par rapport à la plaque 5 est telle que, lorsque cette plaque 5 est verticale, le plan horizontal contenant l'axe de pivotement 6 soit situé en-dessous du centre de gravité de la plaque 5. En d'autres termes, lorsque cette plaque 5, supposée homogène, est en position horizontale, la distance $D_1$ entre l'axe 6 et l'extrémité gauche de la plaque 5 est inférieure à la distance $D_2$ entre l'axe 6 et l'extrémité droite de la plaque 5. Pour favoriser ledit basculement, l'axe de pivotement 6 est en outre situé en dehors de la plaque et tel qu'il se trouve au-dessus de cette plaque 5 lorsque celle-ci est horizontale, étant donné le sens de basculement de la plaque 5, conditionné par le sens de circulation de l'air dans le conduit 2. De plus, deux arrêtoirs 14 et 15 sont fixés au conduit 2, à l'intérieur de celui-ci, de manière à définir la seconde position 13 de la plaque 5, c'est-à-dire à arrêter celle-ci en position horizontale lorsqu'elle est en train de basculer.

La pièce 7, ou biellette, l'autre pièce 8, ou basculeur, et le moyen 10 de déplacement sont montés, comme on va maintenant l'expliquer, sur un bâti 16, par exemple en U, composé de deux flasqueu 16a et 16b (figure 2) reliés par un fond 16c et prévu pour être fixé au conduit 2 par exemple à l'aide de vis 17, par l'intermédiaire de l'un des deux flasques. La biellette 7 est pourvue d'un axe 18 qui est prévu pour tourner dans des paliers 19 et 20 dont sont respectivement munis les deux flasques 16a et 16b. En outre, l'extrémité 21 de l'axe 18 de la biellette 7 et l'extrémité 22 de l'axe de pivotement 6 de la plaque 5, extrémités destinées à venir en regard l'une de l'autre lorsque le bâti 16 est fixé au conduit 5, sont prévues pour être raccordées rigidement l'une à l'autre et de telle façon que l'axe de pivotement 6 de la plaque 5 et l'axe 18 de la biellette 7 soient alors dans le prolongement l'un de l'autre, lorsque le bâti 16 est fixé au conduit 2. Pour ce faire, l'extrémité 22 de l'axe de pivotement 6 est par exemple de forme hexagonale et l'extrémité 21 de l'axe 18 de la biellette 7 comporte alors un trou hexagonal adapté à la réception de ladite extrémité 22 de forme hexagonale.

Le basculeur 8 est monté tournant sur l'axe 18 de la biellette 7 par l'intermédiaire d'une extrémité 23, par exemple en forme de chape, dudit basculeur 8, l'autre extrémité 24 (figure 1) de celui-ci portant l'électro-aimant 9.

Le moyen 10 de déplacement consiste par exemple en un vérin électromagnétique comportant, de façon connue dans l'état de la technique, un corps 25 et une tige 26. Le corps 25 est apte à pivoter par rapport au bâti 16, autour d'un axe 27 horizontal et la tige 26 est articulée sur le basculeur 8.

Le basculeur 8 est prévu pour maintenir, grâce à l'électro-aimant 9, convenablement excité, la biellette 7 dans une position 28 indiquée en traits mixtes sur la figure 1, position correspondant à l'état ouvert du conduit 2, c'est-à-dire à la position 12 verticale de la plaque 5. Pour ce faire, la biellette 7 est conçue pour former un angle aigu à, par exemple égal 45°, avec la plaque 5, lorsqu'elle en est rendue rigidement solidaire par l'intermédiaire de l'axe 18 de la biellette 7, cet angle étant compté en tournant dans le sens contraire des aiguilles d'une montre à partir de la plaque 5 vers la biellette 7 ; le basculeur 8 est monté tournant sur l'axe 18 de la biellette 7 de manière à se trouver après celle-ci, toujours en partant de la plaque 5 et en tournant dans le sens contraire des aiguilles d'une montre ; l'électro-aimant 9 est monté à l'extrémité 24 du basculeur 8 de

3

manière que son noyau 29 puisse venir toucher un élément 30 de la biellette 7, en fer doux et disposé à l'extrémité de cette biellette 7, lorsque le basculeur 8 est placé contre la biellette 7 ; et le vérin 10, dont la tige 26 est apte à occuper une position rentrée et une position sortie, est monté sur le bâti 16 de telle manière que, lorsque la tige 26 et la plaque 5 sont respectivement en positions rentrée et verticale, le noyau 29 de l'électro-aimant 9 soit en contact avec l'élément 30 de la biellette 7 et que, lorsque la tige 26 et la plaque 5 sont respectivement en positions sortie et horizontale, le noyau 29 de l'électro-aimant 9 soit également en contact avec l'élément 30 de la biellette 7.

Un premier et un second interrupteurs de position électriques 31 et 32 (figure 2) sont montés sur le bâti 16 et prévus pour rendre compte de l'état ouvert ou fermé du conduit 2. Les interrupteurs 31 et 32 sont par exemple des microrupteurs respectivement pourvus d'un premier et d'un second poussoirs 33 et 34 et montés côte à côte sur le bâti 16, au voisinage de la base 35 de la biellette 7, base qui comporte l'axe 18 de cette biellette 7. Deux encoches 36 et 37 sont pratiquées sur le pourtour de ladite base 35 et respectivement associées aux poussoirs 33 et 34. Le premier microrupteur 31 (respectivement le second microrupteur 32) est monté sur le bâti 16 de telle manière que son poussoir 33 (respectivement 34) soit à l'état sorti lorsque l'encoche associée 36 (respectivement 37) est en regard dudit poussoir et à l'état rentré dans le cas contraire. En outre, les encoches 36 et 37 sont pratiquées sur le pourtour de ladite base 35 de telle manière que les poussoirs 33 et 34 aient des états inverses l'un de l'autre lorsque la biellette 7 est dans sa position correspondant à l'état ouvert du conduit 2 et également lorsque cette biellette 7 est dans sa position correspondant à l'état fermé du conduit 2. A titre d'exemple, les microrupteurs 31 et 32 fonctionnent de la façon indiquée sur le tableau 1 suivant :

**Tableau 1**

|  | conduit ouvert | conduit fermé |
|---|---|---|
| premier poussoir 33 | sorti | rentré |
| second poussoir 34 | rentré | sorti |

Un troisième interrupteur de position électrique 38 constitué par exemple par un microrupteur et pourvu d'un poussoir 39 est monté sur le bâti 16 au voisinage de ladite base 35 et prévu pour rendre compte de la position du basculeur 8 et donc de la position de la tige 26 (figure 1) du vérin 10. Une troisième encoche 40 (figure 2) est pratiquée sur le pourtour de ladite base 35 et prévue pour être associée au troisième microrupteur 38. Celui-ci est monté sur le bâti 16 de telle manière que son poussoir 39 soit à l'état sorti lorsque la troisième encoche 40 est en regard dudit poussoir, et à l'état rentré dans le cas contraire. En outre, cette troisième encoche 40 est pratiquée sur ladite base 35 de telle manière que le poussoir 39 du troisième microrupteur 38 soit par exemple rentré lorsque la tige 26 (figure 1) du vérin 10 est sortie, et sorti dans le cas contraire.

Des moyens de commande 41, réalisables par l'homme de l'art, sont prévus pour recevoir des indications des microrupteurs 31, 32 et 38 (figure 2) concernant l'état rentré ou sorti des poussoirs de ceux-ci et pour commander l'électro-aimant 9 (figure 1) et le vérin 10 en fonction de ces indications. Les moyens de commande 41 sont reliés à des moyens 42 de visualisation des états des microrupteurs, du vérin et de l'électro-aimant et donc de l'état ouvert ou fermé du conduit 2. Les moyens de commande 41 peuvent être en outre reliés à un ou plusieurs détecteurs 43 de fumée ou de température, à seuils, placés dans le conduit 2 de manière qu'un opérateur puisse agir, par l'intermédiaire des moyens de commande 41, sur l'électro-aimant 9 et/ou le vérin 10 en fonction de signaux reçus desdits détecteurs 43. Par ailleurs, les liaisons électriques entre les moyens de commande 41 et l'électroaimant 9, le vérin 10 et les microrupteurs 31, 32 et 38 (figure 2) sont effectuées par l'intermédiaire d'un boîtier électrique 44 qui est monté sur le bâti 16 (figure 1) et duquel partent les différents conducteurs électriques 45 permettant la commande de l'électro-aimant 9, du vérin 10 et des microrupteurs 31, 32 et 38 (figure 2). Les moyens de commande 41 (figure 1) peuvent être très éloignés de l'obturateur selon l'invention et le boîtier 44 est par exemple muni de fiches électriques embrochables non représentées permettant d'établir, entre lui et les moyens de commande 41, les liaisons électriques nécessaires au fonctionnement de l'obturateur objet de l'invention. Ce fonctionnement va maintenant être expliqué :

En temps normal, le conduit 2 est ouvert. La plaque 5 est maintenue en position verticale grâce à l'électro-aimant 9 qui est alimenté par les moyens de commande 41 et dont le noyau 29 maintient alors la biellette 7 par l'intermédiaire de l'élément 30 de cette dernière, la tige 26 du vérin étant en position rentrée dans l'exemple considéré. En cas d'incendie signalé par les détecteurs 43, l'alimentation de l'électro-aimant 9 est coupée, ce qui libère la biellette 7 et donc la plaque 5, qui bascule alors sous l'effet de la pesanteur dans sa position correspondant à l'état fermé du conduit 2. Bien entendu, la biellette 7 est réalisée de manière à être suffisamment légère par rapport à la plaque 5 pour ne pas s'opposer au basculement de cette plaque 5. L'alimentation de l'électro-aimant 9 peut être également coupée lors d'essais périodiques de fonctionnement de l'obturateur selon l'invention.

En cas de non basculement de la plaque 5 après coupure de l'alimentation de l'électro-aimant 9, ce dont on peut s'apercevoir grâce aux moyens 42 de visualisation, le vérin 10 est activé de manière que sa tige 26 passe de sa position rentrée à sa position sortie, poussant ainsi le basculeur 8 qui pousse à son tour la biellette 7, ce qui amène la plaque 5 en position horizontale de manière à fermer le conduit 2. Après quoi, l'alimentation électrique de l'électro-aimant 9 est coupée et le basculeur 8 peut alors être ramené à sa position initiale, correspondant à la position rentrée de la tige 26 du vérin 10, celui-ci étant activé à cet effet.

4

En cas de fausse alerte ou d'essais, le conduit 2 fermé comme on vient de l'expliquer, peut être rouvert de la façon suivante :

l'électro-aimant 9 est alimenté en courant électrique et le vérin 10 est activé de manière à faire passer sa tige 26 de l'état rentré à l'état sorti, ce qui fait tourner le basculeur 8 dont l'électro-aimant 9 vient alors au contact de l'élément 30 de la biellette 7. Cet élément 30 est attiré par le noyau 29 de l'électro-aimant 9. La commande inverse du vérin 10 fait alors repasser la tige 26 de celui-ci en position rentrée, ce qui ramène le basculeur 8 et donc la biellette 7 en arrière. La plaque 5 se retrouve ainsi en position verticale et le conduit 2 est à nouveau ouvert. Bien entendu, on pourrait rendre la fermeture du conduit 2 automatique dès que la température ou la concentration en fumée de l'air qu'il contient dépasse un certain seuil.

Dans l'obturateur selon l'invention que l'on vient de décrire, on peut avantageusement utiliser un vérin à fin de courses réglables. On peut aussi avantageusement rendre les fins de courses de la plaque 5 réglables en rotation. Par ailleurs, les matériaux constituant les différents éléments de l'obturateur selon l'invention (plaque, biellette, basculeur...), dans son application en tant que coupe-feu, sont déterminables par l'homme de l'art.

On dispose ainsi d'un obturateur dont le vérin, par construction, ne peut en aucun cas bloquer ledit obturateur en position ouverte et qui est mécaniquement homogène. En outre, le bâti peut être monté indifféremment d'un côté de la plaque ou de l'autre, en adaptant évidemment l'extrémité correspondante de l'axe de pivotement, alors que dans l'art antérieur, il était nécessaire d'avoir accès aux deux côtés opposés des obturateurs, les mécanismes de fermeture et d'ouverture de ces obturateurs étant situés sur deux côtés différents de ceux-ci, ce qui imposait une géométrie compliquée aux conduits. De plus, tous les éléments du mécanisme de l'obturateur selon l'invention sont situés sur ledit bâti et se montent ou se démontent donc en une seule fois, ce qui évite, lors du montage ou du démontage, d'avoir à mettre hors service le reste de l'installation dont fait partie l'obturateur.

Sur la figure 3, on a représenté schématiquement un obturateur selon l'invention, monté sur un conduit 2 horizontal. Cet obturateur est composé des mêmes éléments que celui qui est représenté sur les figures 1 et 2 mais ces éléments sont bien entendu montés en tenant compte de l'orientation du conduit 2. De l'air est susceptible de circuler dans ce conduit 2 dans un sens indiqué par une flèche 46. Aussi la plaque 5 de l'obturateur est-elle prévue pour basculer dans le même sens, d'une position horizontale correspondant au conduit ouvert à une position verticale correspondant au conduit fermé.

Sur la figure 4, on a représenté schématiquement un obturateur selon l'invention, monté sur un conduit 2 vertical. Cet obturateur est identique à celui qui est représenté sur les figures 1 et 2, excepté en ce qui concerne la position de la plaque 5 correspondant à l'état ouvert du conduit 2 : la biellette 7 est rendue solidaire de l'axe 6 de pivotement de manière que dans cette position, la plaque 5 soit inclinée d'un angle aigu β par rapport à la verticale, cet angle étant compté dans le sens de basculement de la plaque 5 par rapport à la verticale. Ceci évite d'avoir l'axe 6 de pivotement en-dehors de la plaque 5. On voit aussi sur la figure 4 que de l'air est susceptible de circuler dans le conduit 2 selon un sens indiqué par une flèche 47. La plaque 5 est alors prévue pour basculer dans le même sens.

Bien entendu, dans la description qui précède, on donne au mot "conduit" un sens très large. L'invention s'applique à l'obturation de toute ouverture pratiquée dans une paroi. L'épaisseur d'une telle paroi n'étant jamais nulle, l'ouverture peut ainsi être considérée comme un conduit de faible longueur.

**Revendications**

1. Obturateur de conduit comprenant :
- un élément (5, 6) de fermeture du conduit (2), cet élément étant apte à pivoter autour d'un axe (6) et à occuper une première (12) et une seconde (13) positions correspondant respectivement aux états ouvert et fermé du conduit (2),
- une pièce (7) rendue rigidement solidaire de l'élément (5, 6) de fermeture et ainsi apte à occuper une première et une seconde positions correspondant respectivement aux états ouvert et fermé du conduit (2),
- un organe (8, 9) mobile par rapport à la pièce (7), et
- un moyen (10) de déplacement de l'organe (8, 9), obturateur caractérisé en ce que ledit élément de fermeture (5, 6) est en outre apte à passer de la première position à la seconde par basculement sous l'effet de la pesanteur, et en ce que ledit organe (8, 9) comprend un élément (8) mobile par rapport à la pièce (7) et un électro-aimant (9) qui, porté par l'élément mobile (8) est prévu pour maintenir la pièce (7) contre l'élément mobile (8) lorsque cet électro-aimant (9) est excité par des moyens (41) de commande, l'organe (8, 9) permettant de provoquer, sous l'action du moyen de déplacement (10), d'une part, lorsque l'électro-aimant (9) est excité, un mouvement de la pièce (7) de sa seconde à sa première position, celle-ci étant stable tant que l'électro-aimant (9) est excité, la seconde position de la pièce (7) étant obtenue lorsque l'électro-aimant (9) est désexcité, libérant ainsi la pièce (7) et provoquant donc le basculement de l'élément (5, 6) de fermeture, et d'autre part, un mouvement inverse de la pièce (7), garantissant ainsi la fermeture du conduit (2) au cas où l'élément (5, 6) de fermeture ne basculerait pas une fois la pièce (7) libérée de l'action de l'électro-aimant, lorsque celui-ci est désexcité.

2. Obturateur de conduit selon la revendication 1, caractérisé en ce que le moyen (10) de déplacement de l'organe est un vérin comportant un corps (25) et une tige (26) articulée sur l'élément mobile (8) et en ce que ce vérin est prévu pour déplacer cet élément mobile (8) par l'intermédiaire de la tige (26).

3. Obturateur de conduit selon l'une quelconque des revendications 1 et 2, caractérisé en ce que l'élément (5, 6) de fermeture comporte une plaque (5) apte à pivoter à l'intérieur du conduit (2) grâce à un axe (6) de pitovement dont elle est rendue rigidement solidaire, en ce que la pièce (7) est rendue rigidement solidaire dudit axe (6) de pivotement et en ce que l'élément mobile (8) est mobile en rotation par rapport à cette pièce (7), coaxialement à celle-ci.

4. Obturateur de conduit selon la revendication 3, caractérisé en ce que des arrêtoirs (14, 15) sont prévus à l'intérieur du conduit (2) pour définir la seconde position de la plaque (5).

5. Obturateur de conduit selon la revendication 4, caractérisé en ce qu'un fluide étant susceptible de s'écouler dans le conduit (2), la plaque (5) est prévue pour basculer dans le sens de l'écoulement du fluide.

6. Obturateur de conduit selon l'une quelconque des revendications 3 à 5, caractérisé en ce que le conduit (2) étant vertical, ledit axe (6) de pivotement est situé en dehors de la plaque (5), de façon à favoriser le basculement de cette plaque.

7. Obturateur de conduit selon l'une quelconque des revendications 3 à 6, caractérisé en ce que ladite pièce (7) comporte un élément (30) attirable par l'électro-aimant (9) lorsque celui-ci est excité.

8. Obturateur de conduit selon l'une quelconque des revendications 3 à 7, caractérisé en ce que tedit organe (8, 9), ladite pièce (7) et ledit moyen (10) de déplacement sont montés sur un bâti (16) prevu pour être fixé sur le conduit (2) et en ce que ladite pièce (7) comporte un axe de rotation (18) prévu pour tourner par rapport au bâti (16) et pour se trouver rigidement relié à l'axe (6) de pivotement de ladite plaque (5) et dans le prolongement de celui-ci, une fois le bâti (16) fixé au conduit (2).

9. Obturateur de conduit selon l'une quelconque des revendications 1 à 8, caractérisé en ce qu' il comporte en outre deux interrupteurs de position (31, 32) électriques coopérant avec ladite pièce (7) pour rendre compte de l'état ouvert ou fermé du conduit (2).

10. Obturateur de conduit selon la revendication 9, caractérisé en ce qu'il comporte en outre un troisième interrupteur de position (38) électrique coopérant avec ledit élement mobile (8) pour rendre compte de la position de ce dernier.

11. Application de l'obturateur de conduit selon l'une quelconque des revendications 1 à 10, à l'équipement de clapets coupe-feu.


**Patentansprüche**

1. Kanalverschlußvorrichtung mit:
- einem Schließelement (5, 6) für den Kanal (2), wobei dieses Element um eine Achse (6) schwenken und eine erste (12) und eine zweite (13) Stellung entsprechend dem geöffneten bzw. geschlossenen Zustand des Kanals (2) annehmen kann,
- einem Teil (7), welcher starr mit dem Schließelement (5, 6) verbunden ist und somit eine erste und eine zweite Stellung entsprechend dem geöffneten bzw. geschlossenen Zustand des Kanals (2) annehmen kann,
- einem in bezug auf den Teil (7) bewegbaren Organ (8, 9), und
- einer Bewegungseinrichtung (10) für das Organ (8, 9), dadurch gekennzeichnet, daß das genannte Schließelement (5, 6) ferner von der ersten Stellung in die zweite Stellung durch Kippen aufgrund seines Eigengewichts gelangen kann und daß das genannte Organ (8, 9) ein in bezug auf den Teil (7) bewegbares Element (8) und einen von dem bewegbaren Element (8) getragenen Elektromagnet (9) aufweist, der vorgesehen ist, um den Teil (7) an dem bewegbaren Element (8) zu halten, wenn dieser Elektromagnet (9) von Steuermitteln (41) erregt ist, das Organ (8, 9) unter der Wirkung der Bewegungseinrichtung (10) einerseits, wenn der Elektromagnet (9) erregt ist, eine Bewegung des Teils (7) aus seiner zweiten in die erste Stellung hervorrufen kann, die stabil ist, solange der Elektromagnet (9) erregt ist, wobei die zweite Stellung des Teils (7) erhalten wird, wenn der Elektromagnet (9) enterregt ist, somit den Teil (7) freigibt und daher das Kippen des Schließelements (5, 6) bewirkt, und andererseits eine umgekehrte Bewegung des Teils (7) hervorrufen kann, wodurch somit das Schließen des Kanals (2) in dem Fall garantiert ist, in dem das Schließelement (5, 6) nicht kippt, wenn der Teil (7) von der Wirkung des Elektromagneten freigegeben ist, wenn dieser enterregt ist.

2. Kanalverschlußvorrichtung nach Anspruch 1, dadurch gekennzeichnet, daß die Bewegungseinrichtung (10) für das Organ ein Linearantrieb ist, der einen Körper (25) und eine an dem bewegbaren Elemente (8) angelenkte Stange (26) umfaßt, und daß dieser Linearantrieb vorgesehen ist, um dieses bewegbare Element (8) mittels der Stange (26) zu bewegen.

3. Kanalverschlußvorrichtung nach irgendeinem der Ansprüche 1 oder 2, dadurch gekennzeichnet, daß das Schließelement (5, 6) eine Platte (5) umfaßt, die im Inneren des Kanals (2) dank einer Schwenkachse (6) verschwenkbar ist, mit der jene starr verbunden ist, daß der Teil (7) starr mit der Schwenkachse (6) verbunden ist und daß das bewegbare Element (8) in bezug auf diesen Teil (7) und koaxial zu ihm drehbewegbar ist.

4. Kanalverschlußvorrichtung nach Anspruch 3, dadurch gekennzeichnet, daß Stopper (14, 15) im Inneren des Kanals (2) vorgesehen sind, um die zweite Stellung der Platte (5) festzulegen.

5. Kanalverschlußvorrichtung nach Anspruch 4, dadurch gekennzeichnet, daß ein Fluid in dem Kanal (2) strömen kann und die Platte (5) vorgesehen ist, um in Strömungsrichtung zu kippen.

6. Kanalverschlußvorrichtung nach irgendeinem der Ansprüche 3 bis 5, dadurch gekennzeichnet, daß der Kanal (2) vertikal verläuft, sich die genannte Schwenkachse (6) außerhalb der Platte (5) befindet, damit das Kippen dieser Platte unterstützt wird.

7. Kanalverschlußvorrichtung nach irgendeinem der Ansprüche 3 bis 6, <u>dadurch gekennzeichnet</u>, daß der genannte Teil (7) ein von dem Elektromagnet (9) anziehbares Element (30) umfaßt, wenn dieser erregt ist.

8. Kanalverschlußvorrichtung nach irgendeinem der Ansprüche 3 bis 7, <u>dadurch gekennzeichnet</u>, daß das genannte Organ (8, 9), der genannte Teil (7) und die Bewegungseinrichtung (10) auf einer Grundplatte (16) angebracht sind, die zur Befestigung an dem Kanal (2) vorgesehen ist, und daß der genannte Teil (7) eine Drehachse (18) aufweist, die vorgesehen ist, sich in bezug auf die Grundplatte (16) zu drehen und sich starr mit der Schwenkachse (6) der genannten Platte (5) verbunden und in der Verlängerung jener zu befinden, wenn die Grundplatte (16) an dem Kanal (2) befestigt ist.

9. Kanalverschlußvorrichtung nach irgendeinem der Ansprüche 1 bis 8, <u>dadurch gekennzeichnet</u>, daß sie ferner zwei elektrische Positionsschalter (31, 32) aufweist, die mit dem genannten Teil (7) zusammenwirken, um den offenen oder geschlossenen Zustand des Kanals (2) zu berücksichtigen.

10. Kanalverschlußvorrichtung nach Anspruch 9, <u>dadurch gekennzeichnet</u>, daß sie ferner einen dritten, elektrischen Positionsschalter (38) aufweist, der mit dem genannten bewegbaren Element (8) zusammenwirkt, um die Position dieses Letzteren zu berücksichtigen.

11. Verwendung der Kanalverschlußvorrichtung nach irgendeinem der Ansprüche 1 bis 10 zur Ausrüstung von Feuerklappen.

**Claims**

1. Blanking cover for a pipe (2) incorporating a pipe closing member (5, 6), which is able to pivot about a pivot pin (6) and occupy first (12) and second (13) positions respectively corresponding to the open and closed states of the pipe (2), a part (7) rendered rigidly integral with the closing member (5, 6) and thus able to occupy first and second positions respectively corresponding to the open and closed state of the pipe (2), a member (8, 9) which moves with respect to the part (7) and a means (10) for displacing the member (8, 9), characterized in that the closing member (5, 6) is also able to pass from the first position to the second by tilting under the effect of gravity and in that said member (8, 9) comprises an element (8) which moves with respect to the part (7) and an electromagnet (9) which, carried by the moving element (8), maintains the part (7) against the moving element (8) when said electromagnet (9) is excited by control means, the member (8, 9) making it possible to bring about, under the action of the displacement means (10), on the one hand when the electromagnet (9) is excited, a movement of the part (7) from its second to its first position, the latter being stable when the electromagnet (9) is excited, the second position of the part (7) being obtained when the electromagnet, (9) is deexcited, thus releasing the part (7) and bringing about the tilting of the closing member (5, 6) and on the other hand a reverse movement of the part (7), thus ensuring the closing of the pipe in the case when the closing member does not tilt when the part has been freed from the action of the electromagnet, when the latter is deexcited.

2. Pipe blanking cover according to claim 1, characterized in that the means (10) for displacing the member is a jack having a body (25) and a rod (26) articulated on the moving element (8) and in that the jack is able to displace the moving element (8) by means of the rod (26).

3. Pipe blanking cover according to either of the claims 1 and 2, characterized in that the closing means (5, 6) has a plate (5) able to pivot within the pipe (2) by means of a pivot pin (6) with which it is rendered integral, in that the part (7) is fixed to the pivot pin (6) and in that the moving element (8) rotates with respect to said part (7) and coaxially thereto.

4. Pipe blanking cover according to claim 3, characterized in that stops (14, 15) are provided within the pipe (2) to define the second position of the plate (5).

5. Pipe blanking cover according to claim 4, characterized in that fluid is able to flow in the pipe (2) and the plate (5) tilts in the fluid flow direction.

6. Pipe blanking cover according to any one of the claims 3 to 5, characterized in that, with the pipe (2) vertical, the pivot pin (6) is positioned outside the plate (5), so as to aid the tilting of the plate.

7. Pipe blanking means according to any one of the claims 3 to 6, characterized in that the part has an element (30) which can be attracted by electromagnet (9) when the latter is excited.

8. Pipe blanking cover according to any one of the claims 3 to 7, characterized in that said member (8, 9), said part (7) and said displacement means (10) are mounted on a frame (16) for fixing to the pipe (2) and in that said part (7) has a rotation spindle (18) for rotating relative to the frame (16) and rigidly connected to the picot pin (6) of said plate (5) and in the extension thereof, once the frame (16) has been fixed to the pipe (2).

9. Pipe blanking cover according to any one of the claims 1 to 8, characterized in that it also has two electrical position switches (31, 32), cooperating with the said part (7), to take account of the open or closed state of the pipe (2).

10. Pipe blanking cover according to claim 9, characterized in that it also has a third electrical position switch (38) cooperating with said moving element (8) to take account of its position.

11. Application of the pipe blanking cover according to any one of the claims 1 to 10, to the equipping of fire arresting valves.

FIG.1

0 112 207

FIG.2

FIG.3

FIG.4